# EUROPEAN PATENT APPLICATION

(11) **EP 1 674 001 A2**
(43) Date of publication of application: **28.06.2006**
(21) Application number: 04425942.2
(22) Date of filing: 23.12.2004
(51) Int. Cl.: A47B 47/04, A47B 96/06

(54) **Wall fixing system for furniture components and components comprising said system**

(71) Applicant: Arflex International S.p.A., 20034 Giussano (MI) (IT)
(72) Inventor: Colombo, Fausto c/o Arflex International S.p.A., 20034 Giussano (IT)
(74) Representative: Long, Giorgio

(57) **Abstract**

The invention relates to a wall-fixing system for furniture components such as consoles (1) which is capable of facilitating the fixing and improving visual appearance.

## Description

The present invention relates to a wall fixing system for furniture components and particularly a wall fixing system for consoles.

A number of systems have been known for a long time to fix furniture components, such as consoles, shelves or bookshelves to a wall.

The most common systems consist of L-shaped brackets being usually fixed, for example, on a surface of a console and then fixed to the face of a wall. The fixing of L-shaped brakets to a console is usually carried out for example by means of expansion bolts.

A system such as described above, though being practical, suffers from some drawbacks in that a console being fixed to a wall by means of L-shaped brackets has a limited load capacity.

Furthermore, when fixing a number of consoles one above another, the presence of L-shaped brackets can take away space from the material rested thereon, and they are not considered as being visually attractive in any case.

A different fixing system consists of pins being inserted in the thickness of the wall such as to leave a projecting portion therebetween for a console to be fitted on said projecting portion by means of seats formed in the thickness of the console.

Unlike the fixing system with L-shaped brackets, the fixing system with pins allows to bear a greater load and avoid the problems of bulk and visual appearance described above.

The object of the present invention is to provide a wall fixing system other than the conventional ones, such that furniture components can support a considerable load, while reducing at the same time the bulk thereof thereby achieving an optimum visual appearance.

This object is achieved by means of a wall fixing system for furniture components such as claimed in the independent claim annexed herein.

Further characteristics and the advantages of the present invention will be understood from the description below of an embodiment thereof, which is given as a nonlimiting example, with reference to the drawings, in which:
- Figure 1A is a perspective exploded view of a portion of a fixing system with a console portion having details according to the invention;
- Figure 1B is a complete perspective and exploded view of the fixing system and the console from Figure 1A;
- Figure 2 is a partially sectional side view of the console portion with the fixing system from Figure 1A when not assembled;
- Figure 3 is a perspective back view of the console portion from Figure 1A with the wall-fixing system when assembled;
- Figure 4A is a plan front view of the assembly from Figure 3;
- Figure 4B is a plan back view of the assembly from Figure 3;
- Figure 5 is a perspective view of a pair of consoles being fixed to a wall;
- Figure 6 is a perspective view, both complete and exploded, of the fixing system and the console from Figure 1B in accordance with a variant embodiment.

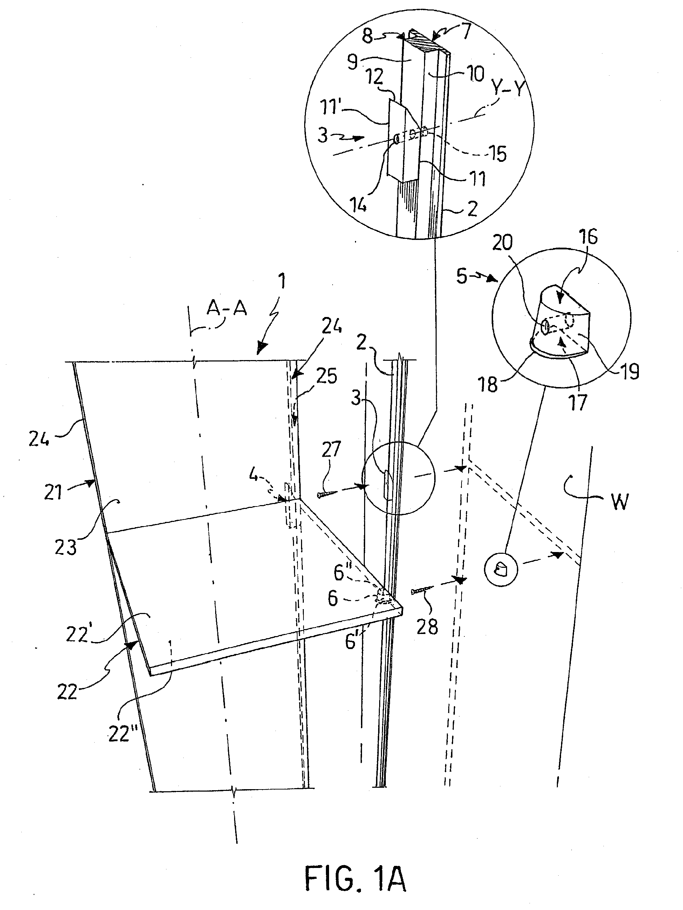

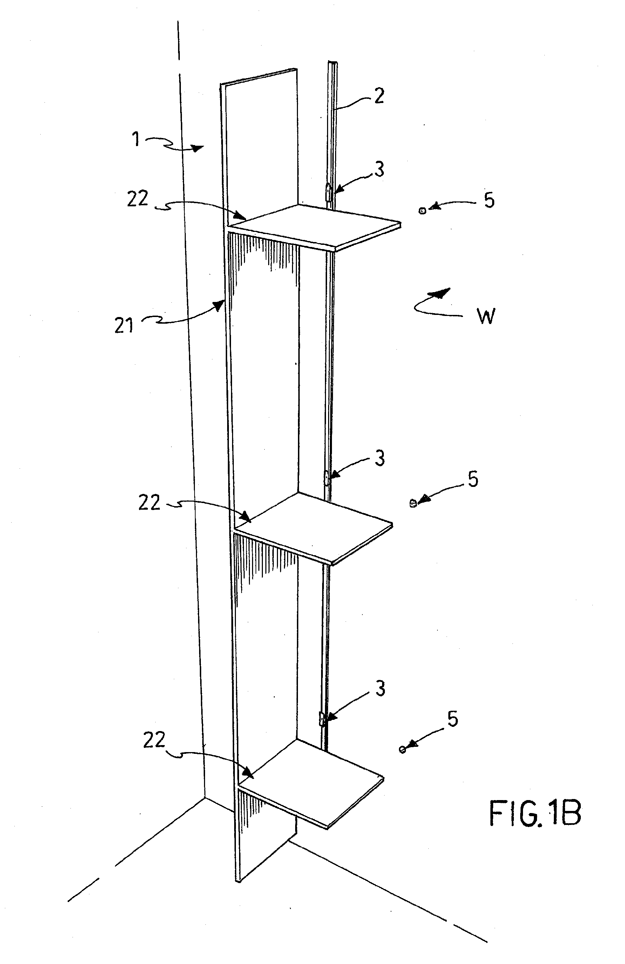

With reference to Figure 1A and Figure 1B, there is shown a wall-fixing system for furniture components 1 comprising at least one profile 2 that can be removably fixed to a wall W, which is provided with fit locking means 3 suitable to be engaged in first seats 4 (Figure 1A) formed on said furniture components.

Preferably, the system further comprises support means 5 to be removably fixed to said wall which are suitable to be engaged in second seats 6 being formed on said components 1 (Figure 1A).

Particularly, the profile 2 is in the form of a rod extending along a longitudinal axis X-X and shows a preferably T-shaped section with a head 7 and a shank 8. The outer surface of the shank 8 has a middle face 9 and two side faces 10, only one of them being depicted in Figures 1A and 1B.

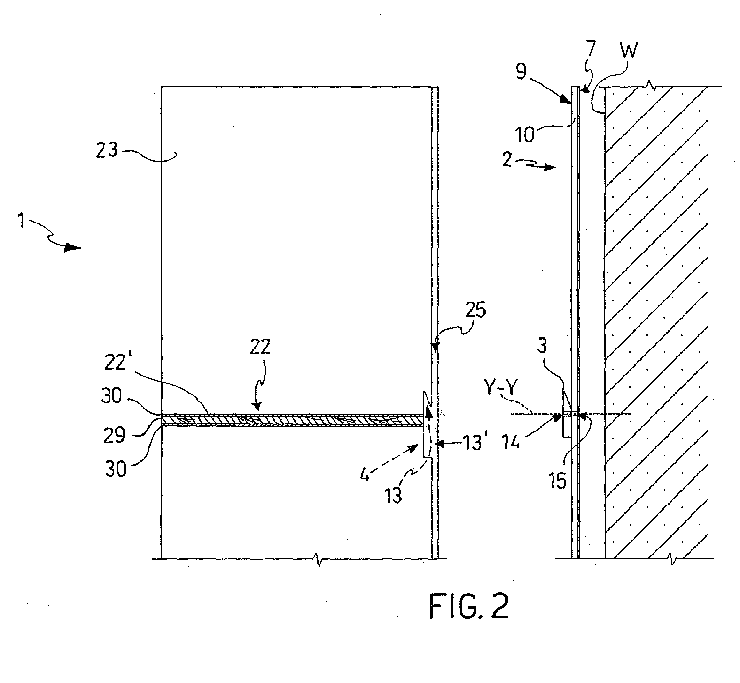

On the middle face 9 there are applied the fit locking means 3 being preferably shaped as a trapezoid polygon comprising a minor base 11 in contact with said middle face and a major base 11' being free and, preferably, parallel to said minor base. Advantageously, said locking means 3 are provided with a tapered portion 12 suitable to provide the fit locking with said component. The minor 11 and major 11' bases are also crossed by a through hole 14 communicating with a through hole 15 of profile 2. Particularly, the through hole 14 of the locking means 3 and the through hole of the profile 2 are crossed by the same axis Y-Y being arranged substantially parallel to the plane of the middle face 9, as is better illustrated in Figure 2. As will be discussed below, said through holes enable engagement with fixing means 27 to the wall W. It should be noted that the fit locking means 3 are secured to the profile in a conventional manner such as, for example, gluing or melting of the contact surfaces.

Preferably, the fixing system in accordance with the invention further comprises support means 5 to be directly fixed to a wall W and coupled with corresponding seats 6 formed on said furniture components 1, as will be specified below. The support means 5 can be represented by elements with a substantially semicylindrical shape being provided with a first semicircle planar base 16, a second semicircle planar base 17 provided with a flange 18 and a semicircular shell 19. The shell 19 is crossed by a through hole 20 enabling to insert fixing means 28 for fixing to the wall W, as will be explained below.

The wall fixing system described above advantageously, on the one hand, allows the same to be coupled with a furniture component 1 like that illustrated in the figures and, on the other hand, to be fixed to said wall in a simple, quick and safe manner.

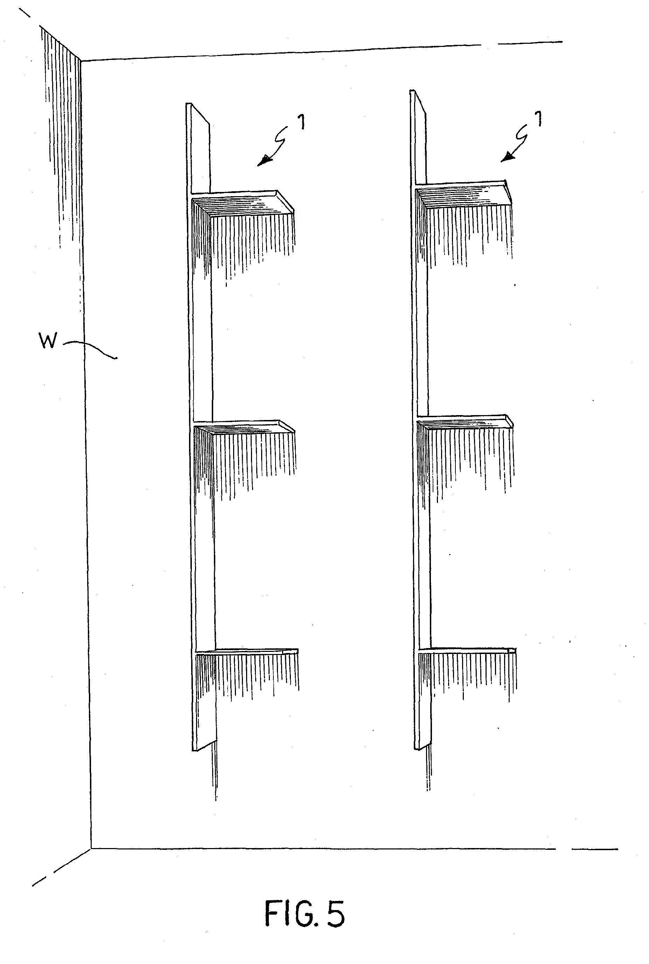

Preferably, this furniture component 1 can be a console comprising at least one stud 21 or shoulder and at least one shelf 22 being conventionally connected thereto, such as to form a shelving, as better illustrated in Figures 1B and 5. The stud 21 can be a board extending along a longitudinal axis A-A, shelves 22 substantially perpendicular to said table starting therefrom.

Accordingly, the stud 21 comprises two opposite faces 23, only one being shown in the figures, and two longitudinal side edges 24. The edges 24 are the thickness of the stud.

Particularly, at one of the two edges 24 of the stud 21 there is formed a longitudinal seat 2 suitable to house the profile 2. Furthermore, along said seat 25 there are arranged the seats 4 for fit housing the fit locking means 3 described above. Preferably, these seats 4 are located at the connection of the stud 21 with the shelf 22.

Advantageously, the seat 25 is such to entirely and closely house the shank 8 of the profile 2 and, at the seats 4, the locking means 3, whereby the fixing system is concealed within the thickness of stud 21. Actually, the head 7 will abut against the corners (not shown) of the seat 25 of the profile such as to be continuous and on the same plane as the face 23 of the stud.

It should be noted that the seats 4 have such a shape to house said means 3 subtantially by shape coupling such as to form a joint. Particularly, each seat 4 is provided with an undercut 13 suitable to fit house the tapered portion 12 of the first fitting means 3 of profile 2. Furthermore, as is better illustrated in Figure 2, the opening 13' for inserting said seats 4 is such as to preferably substantially house the major base 11' of the means 3 in order to facilitate both centering and joining, as will be described below.

The shelf 22 comprises a first face 22', a second face 22'' opposite to said first face and an edge 26 substantially perpendicular to the edge 24 of the stud 21. The edge 26 comprises, in turn, the seat 6 for housing the means 5 of the inventive fixing system. Said seat 6 is preferably distally placed relative to the joint of the shelf 22 on the stud 21. Particularly, furthermore, the seat 6 comprises a side wall 6' with a semicircular band, a semicircular bottom 6' ' and is also opened on that face of the shelf facing the floor after the console has been mounted on a wall W.

The wall fixing system for furniture components described above can be advantageously mounted in a very simple manner and such as to ensure a firm support to the components, while still having an optimum visual appearance by extremely reducing the useless bulk of conventional systems.

In greater detail, the profile 2 is first fixed to a wall W as follows.

The profile 2 is rested on a wall W on the side of the head T thereof and such that the tapered portion 12 of the fit locking means 3 faces the ceiling (not shown). At this point, reference is taken of the through hole 14 of the fit locking means 3 being closest to the ceiling. Now, a hole is made in the wall W that is suitable to house a screw 27 crossing the thicknesses of both the fit locking means 3 and the profile 2. Then, the profile 2 is fixed to the wall 3 by means of said screw 27 and vertically aligned relative to the floor. Subsequently, the profile can be locked in the vertical position by similarly fixing the other fitting means 3 to the wall also by means of screws 27.

At this point, the wall-fixing system is ready to receive and then removably fix the console 1 to the wall W. This operation is performed simply by moving the edge 24 of stud 21 towards the profile 2 such that the fit locking means 3 are aligned with the respective seats 4. Then, the major base 11' of said first means is closely inserted in the opening 13' of seat 4 and at the same time the profile 2 is also inserted into its seat 25 formed on the stud 21. It should be noted that in this position the fitting seat 6 is above the support means 5 though not yet being engaged with said means. In fact, the console is now lowered such that the tapered portion 12 of said means 3 and the undercut 13 of seat 4 can be interlocked. After the console 1 has been fixed to the wall, one can preferably fix the means 5 to the wall by taking a reference of their position on the wall. Then, the console is unlocked from the profile by acting in riverse order to what has been described above. The support means 5 are simply fixed to the wall W by means of a screw 28 through their through hole 20. Finally, the console is placed again into engagement, with the profile 2, as above, with the bottom 6'' of seats 6 now resting on the first base 16 of means 5. In this position, the flange 18 of said means 5 abuts against the face 22' of the shelves 22.

Alternatively, the fixing system can be provided with a tool, not shown as known per se in the field with the name of template or jig, substantially consisting of a main rod, secondary rods starting therefrom such as to replicate the profile of the console or however of a furniture component, in general. The template is provided with through holes matching the through holes of the fixing system in order to allow one to take the reference points of the holes on the wall, thereby considerably facilitating fixing the fixing system.

From what has been discussed above, a number of advantages of the wall-fixing system for furniture components in accordance with the present invention become apparent.

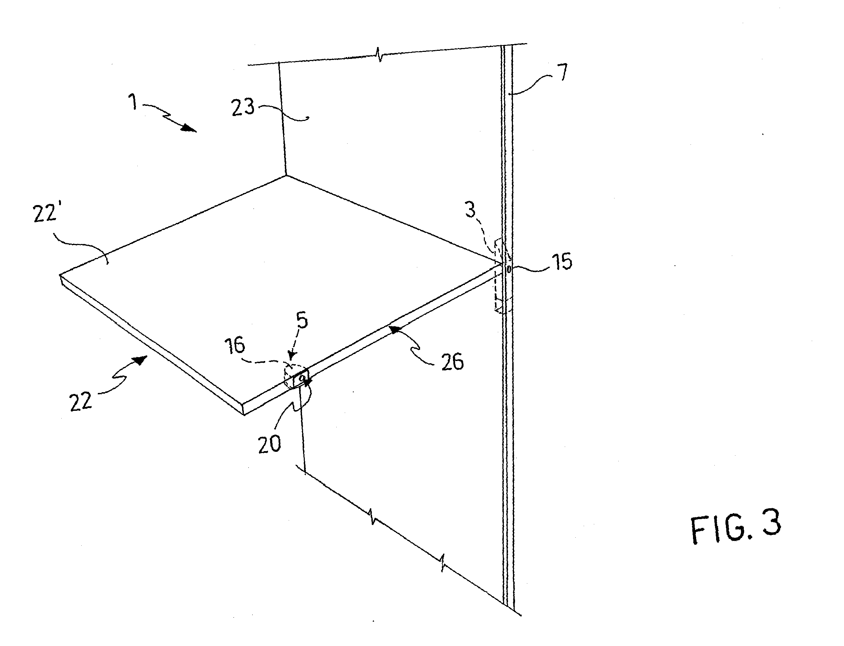

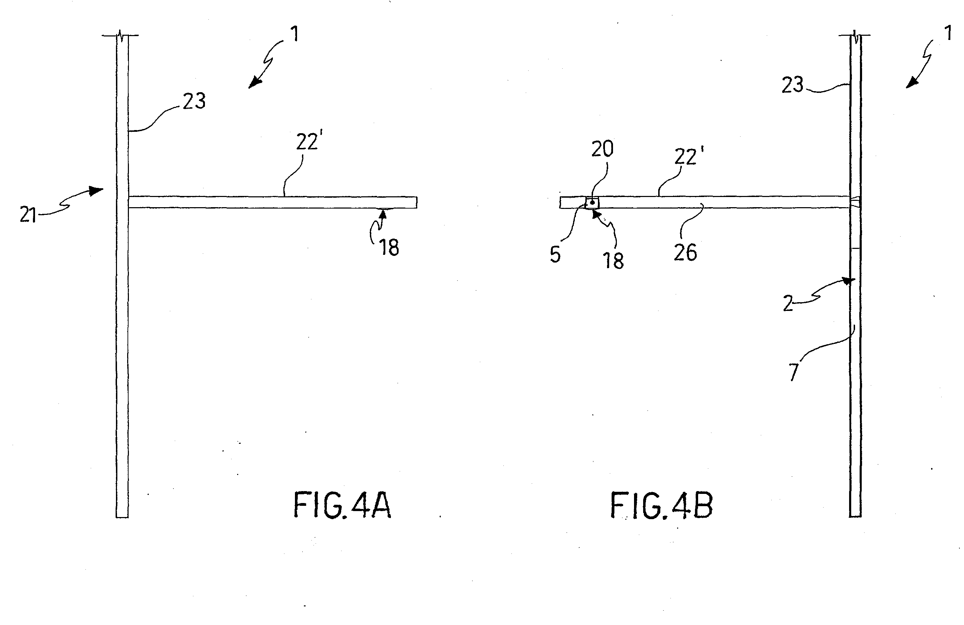

First of all, as shown in Figure 3, when coupled for example with a console for fixing the latter to a wall, the fixing system almost tends to disappear thereby completely eliminating the bulk of those pieces like the brackets mentioned above. In other words, the fixing system disappears from sight like it were an integral part of the console, both when seen from the front (Figure 4A) and from behind (Figure 4B).

It results that all those devices or elements that can encumber, or in other words, interfere with the functionality of the console are completely eliminated. In fact, the space being defined by the stud and each shelf can be entirely used.

Furthermore, unlike other systems, not only a console buth even a shelf or bookshelf or containers in generals can be fixed to a wall without resting on the floor. The visual appearance is thus made particularly good because the furniture component is suspended and not burdened by elements at sight.

Furthermore, the fixing system allows to fix a component to a wall in a very simple, quick and reliable manner, as described above. Particularly, mainly due to the fact that the profile 2 is prearranged by comprising a plurality of support means 3 being distributed all along the stud of a console, the stability and sturdiness of the console are considerably increased. In addition, due to the further prearrangement with second fixing means 5 the load capacity of the console shelves 22 is increased.

Yet another advantage, mainly relative to those consoles fixed with pins, results from the fixing system being applied to a stud or shoulder and not directly to the shelves. The efficacy of the support structure is thereby improved. Furthermore, the pins are usually engaged by interference with the respective seats in the thickness of the console, and thereby oblige to force the engagement. On the contrary, the engagement of the console with the system of the present invention is much more comfortable since it takes place by a simple vertical movement either to obtain the joining described above or to free the locking means.

It should be noted that the fixing system of the invention can be employed with a console as described above. This console can be any type of console being known in the field.

Preferably, as shown in Figure 2, the console 1 is of a composite type, i.e. both the stud 21 and the shelves 22 are formed by a "sandwich-like" structure, a middle layer 29 made of wood or derivatives (MDF) thereof being interposed between two layers 30 of a metal material such as aluminium. The thicknesses of these layers can vary according to particular requirements or preferences, and usually the middle layer 29 can have a thickness of 4 mm to 12 mm, whereas the metal layers 30 can have a thickness of 1 mm to 3 mm. Preferably, the stud 21 provides a "sandwich-like" structure consisting of two outer alluminium layers having a thickness of 1 mm to 3 mm, two inner MDF layers having a thickness of 4 mm to 6 mm that are separated by a further layer of aluminium having a thickness of 2 mm to 4 mm. The shelves 22 consist of two outer aluminium layers having a thickness of 1 mm and 3 mm and an MDF inner layer having a thickness of 10 mm to 12 mm. Still more preferably, the stud comprises two outer aluminium layers having a thickness of 1 mm, two inner MDF layers having a thickness of 4 mm being separated by a further layer of aluminium having a thickness of 2 mm.

The fixing system in accordance with the invention also allows to considerably decrease the thicknesses of the materials forming the furniture components, and particularly of the console such as described above, without altering, when not increasing, the load capacity.

The console can also consist of materials such as plastic or glass according to requirements or preferences.

It should be noted that the console 1 such as illustrated and described comprises a stud and a series of shelves, the stud being vertically aligned to the floor. However, the stud can be placed horizontally such that the shelves are vertical and face the ceiling, as will be described below. With this arrangement, the fixing system can be restricted only to the locking means 3 carried by the profile 2 while the support means 5 may not be provided.

Furthermore, the console comprising the inventive fixing system can be flanked by a similar console in a mirror-like manner, in order to form a modular structure that can be assembled according to particular requirements or preferences. Particularly, in Figure 5, a pair of consoles 1 are arranged parallel to each other and slightly spaced apart thereby creating a particular visual effect. On the contrary, when using the fixing system of the invention, one or more consoles can be placed in different mutual positions, without being forced to use different fixing systems.

Of course, to the wall-fixing system for furniture components according to the present invention, those skilled in the art, aiming at satisfying contingent and specific requirements, will be able to carry out further modifications and variations, all being however contemplated within the scope of protection of the invention such as defined in the annexed claims.

For example, the geometric shapes as well as the size of each piece of the fixing system can be changed. Particularly, the locking and support means can have different shapes from those described above, and accordingly, the respective seats of the console will be also changed in order to obtain the desired fit engagement and however will be such as to allow both the easy and quick shape coupling and a suitable fixing to the wall.

Furthermore, the materials of which the pieces of the fixing system can be manufactured can comprise several metals, such as steel and alloys thereof, or hardened plastic both for the locking and support means and the profile.

In addition, the head 7 of profile 2 can be eliminated such that all the thickness of the profile can be housed in the seat 25 of the stud 21 in case the thickness of the console is such as to allow the profile to be safely housed.

Similarly, the flange 18 of the second fixing means 5 can be removed such that said means are completely housed in the respective seats 6.

The fit locking means 3 can be also obtained as one piece with the profile 2 and be thus manufactured from the same material. Otherwise, they can be separated from the profile and secured thereto upon fixing the console to the wall by means of the screws 27.

As regards the support means 5, they can be variously shaped, as already stated above, such as of truncated cone with the minor base facing the ceiling and the major base being provided with the flange described above.

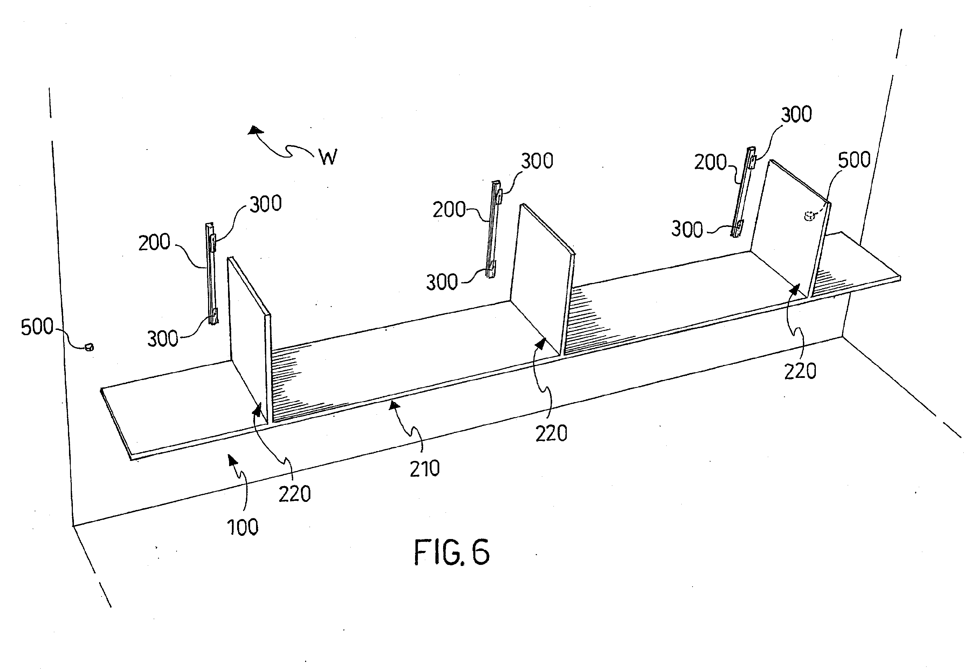

With reference to Figure 6, with reference number 100 there is designated a console substantially identical to the console 1 described above, the only difference being that it is arranged horizontally rather than vertically.

Particularly, the shelves 22 of the above embodiment are designated herein with reference number 220, they are arranged vertically and replace the stud 21. Similarly, the stud 21 of the above embodiment is designated with number 210, it is arranged horizontally and replaces the shelves 22.

It should be noted that in accordance with this variant embodiment, the fixing system comprises a plurality of profiles 200 comprising fit locking means 300 which are completely similar to the profile 2 and the means 3 described above.

With this configuration, the console 100 comprises a long individual support shelf 210 divided by a plurality of studs 220 also functioning as partitions.

Preferably, furthermore, the shelf 210 can be supported by support means 500 for the fixing system identical to the support means 5 of the above embodiment which can be positioned at the end of the shelf.

## Claims

1. A wall fixing system for furniture components (1;100) comprising at least one profile (2;200) that can be removably fixed to a wall (W) which is provided with fit locking means (3;300) suitable to be engaged in corresponding first seats (4) being formed in said furniture components.

2. The fixing system according to claim 1, further comprising support means (5;500) that can be removably fixed to said wall (W) suitable to be engaged in second seats (6) being formed in said components.

3. The fixing system according to claim 1 or 2, wherein the profile (2;200) comprises a head (7) and a shank (8) forming a T-shaped section.

4. The fixing system according to claim 3, wherein the head (7) of the profile (2) comprises a middle face (9) and two side faces (10).

5. The fixing system according to claim 4, wherein the fit locking means (3) are applied to the middle face (9) of the profile (2).

6. The fixing system according to any claim 1 to 5, wherein the fit locking means (3;300) have the shape of a trapezoid polygon.

7. The fixing system according to claim 6, wherein each of the fit locking means (3;300) comprises a minor base (11)being in contact with the middle face (9) and a free major base (11').

8. The fixing system according to any claim 1 to 7, wherein the fit locking means (3;300) are provided with a tapered portion (12) suitable to provide a fit locking with an undercut (13) being formed in the first seats (4) of the components (1).

9. The fixing system according to any claim 1 to 8, wherein the fit locking means (3;300) are crossed by a through hole (14) communicating with and lying on the same axis (Y-Y) as a through hole (15) crossing the thickness of the profile (2).

10. The fixing system according to any claim 2 to 9, wherein the support means (5;500) has a substantially semicylindrical shape comprising a semicircular shell 19 provided with a through hole 20 crossing the entire thickness of said semicylinder.

11. The fixing system according to any claim 1 to 10, further comprising fixing means (27, 28) for fixing the profile (2) and the support means (5) to a wall (W).

12. The fixing system according to claim 11, wherein the fixing means (27, 28) comprise plain screws and expansion bolts.

13. The fixing system according to any claim 1 to 12, comprising a plurality of profiles (2;200) each comprising, in turn, a plurality of fit locking means (3;300).

14. A furniture component (1;100) comprising a fixing system in accordance with any claim 1 to 13.

15. The furniture component according to claim 14, wherein said component is selected from consoles, bookshelves, shelves, cupboards and containers.

16. A console (1;100) comprising a wall-fixing system in accordance with any claim 1 to 13.

17. The console (1;100) according to claim 16 for suspended fixing to a vertical wall (W).

18. The console (1;100) according to claim 16 or 17, comprising at least one stud (21;220) and at least one shelf for each stud (22;210).

19. The console (1) according to claim 18, wherein the stud (21) is a board extending along a longitudinal axis (A-A), the shelves (22) starting therefrom substantially perpendicular to said table.

20. The console (1) according to any claim 16 to 19, comprising a seat (25) suitable to house the shank (8) of the profile (2) of the fixing system in a foldaway manner.

21. The console (1;100) according to any claim 16 to 20, further comprising seats (4) suitable to house the fit locking means (3;300) of the wall fixing system.

22. The console (1) according to claim 20, wherein the seats (4) for the fit locking means (3) are formed in the thickness of the stud (21).

23. The console (1;100) according to any claim 18 to 22, further comprising seats (6) suitable to house the support means (5;500) for the fixing system.

24. The console (1) according to claim 23, wherein the seats (6) for the support means (5) are formed in the thickness of the shelves (22) proximate to their distal ends relative to the junction with the stud (21).

25. The console (1;100) according to any claim 18 to 24, wherein the at least one stud (21;220) and the at least one shelf (22;210) consist of a "sandwich-like" structure comprising a middle layer (29) made of wood or derivatives thereof being interposed between two layers (30) made of a metal material.

26. The console (1;100) according to claim (25), wherein the thickness of the middle layer (29) ranges from 4 mm to 12 mm whereas the metal layer (30) ranges from 1 mm to 3 mm.

27. The console (100) according to any claim 21 to 26, wherein the seats for the fit locking means (300) are formed in the thickness of the studs (220), whereas the seats for the support means (500) are formed in the thickness of the shelf (210).

28. The console (1;100) according to any claim 18 to 24, wherein the at least one stud (21;220) consists of a "sandwich-like" structure comprising two outer aluminium layers having a thickness of 1 mm to 3 mm, two inner MDF layers having a thickness of 4 mm to 6 mm being separated by a further aluminium layer having a thickness of 2 mm to 4 mm, whereas the at least one shelf (22;210) consists of a "sandwich-like" structure comprising two outer aluminium layers having a thickness of 1 mm to 3 mm and an inner MDF layer having a thickness of 10 mm to 12 mm.
